# EUROPEAN PATENT SPECIFICATION

(11) **EP 1 379 053 B1**
(45) Date of publication and mention of the grant of the patent: **15.11.2017**
(21) Application number: 03396054.3
(22) Date of filing: 06.06.2003
(51) Int. Cl.: H04L 29/06, H04W 12/06, H04W 8/00

(54) **METHOD FOR TRANSFERRING A USER-ID PASSWORD PAIR, AND A WIRELESS NETWORK**
VERFAHREN ZUM ÜBERTRAGEN EINES VERBRAUCHERS IDENTIFIZIERUNG - KENNWORT PAARES, UND DRAHTLOSES NETZWERK
PROCÉDÉ POUR TRANSFÉRER UNE PAIRE COMPRENANT UNE IDENTIFICATION D'UTILISATEUR ET UN MOT DE PASSE, ET RÉSEAU SANS FIL

(30) Priority: 20.06.2002 FI 20021217
(43) Date of publication of application: 07.01.2004
(73) Proprietor: Telia Finland Oyj, 00510 Helsinki (FI)
(72) Inventor: Jokela, Harri, 00350 Helsinki (FI); Keisala, Ilkka, 02710 Espoo (FI)
(74) Representative: Kolster Oy Ab

(56) References cited:
- EP-A- 0 912 026
- US-A- 5 640 446

## Description

### FIELD

The invention relates to a method for transferring a user-ID password pair of a user of a roaming wireless data transmission terminal between a visited network and a home network, and to a wireless network.

### BACKGROUND

In the present application, a wireless network and a wireless data transmission terminal refer to wireless data transmission systems implemented with a wireless local area network (WLAN) or short-range radio transceivers, for example, in which roaming known from mobile communication systems can be implemented. Roaming is a function that enables the use of services in each particular location area of the user when the user moves from one network to another with a wireless data transmission terminal, for example from a home network (HN) administered by a domestic operator on domestic ground to a visited network (VN) administered by a foreign operator abroad.

One important function during roaming is the authentication of the user of a wireless data transmission terminal. The authentication can utilize a user-ID password pair, which are transferred from the wireless data transmission terminal to the visited network and which the visited network transfers to the home network in order to authenticate the user.

In accordance with prior art, a data transmission connection is established between the visited network and the home network by using an Internet protocol (IP), for instance the TCP/IP (Transmission Control Protocol / Internet Protocol), the user-ID password pair being transferred in this data transmission connection. The solution requires set-up of new IP connections between the home network and visited network, often in practice between different operators.

EP 0912026 discloses registration scheme for network.

### BRIEF DESCRIPTION

An object of the invention is to provide an improved method for transferring a user-ID password pair of a user of a wireless data transmission terminal between a visited network and a home network, and an improved wireless network.

According to an aspect of the present invention, there is provided a method as specified in claim 1.

According to an another aspect of the present invention there is provided a wireless network as specified in claim 9.

The invention is based on using existing signalling system No. 7 connections and an existing mobile system protocol in a new manner for transferring a user-ID password pair of a wireless network.

A plurality of advantages is achieved with the invention. It allows implementation of roaming between two wireless networks in a simple manner by using a user-ID password pair instead of SIM (Subscriber Identity Module) authentication. The solution utilizes existing signalling No. 7 connections, whereby there is no need to set up new IP connections between the visited network and the home network, for example.

### LIST OF FIGURES

The invention will now be described in greater detail in connection with preferred embodiments, with reference to the attached drawings, of which
Figure 1 is a simplified block diagram illustrating the structure and interfaces of a wireless network;
Figure 2 is a flow chart illustrating a method for transferring a user-ID password pair of the user of a roaming wireless data transmission terminal between a visited network and a home network; and
Figure 3 is a signal sequence diagram showing, in a simplified manner, transfer of a user-ID password pair and an authentication response between network elements.

### DESCRIPTION OF EMBODIMENTS

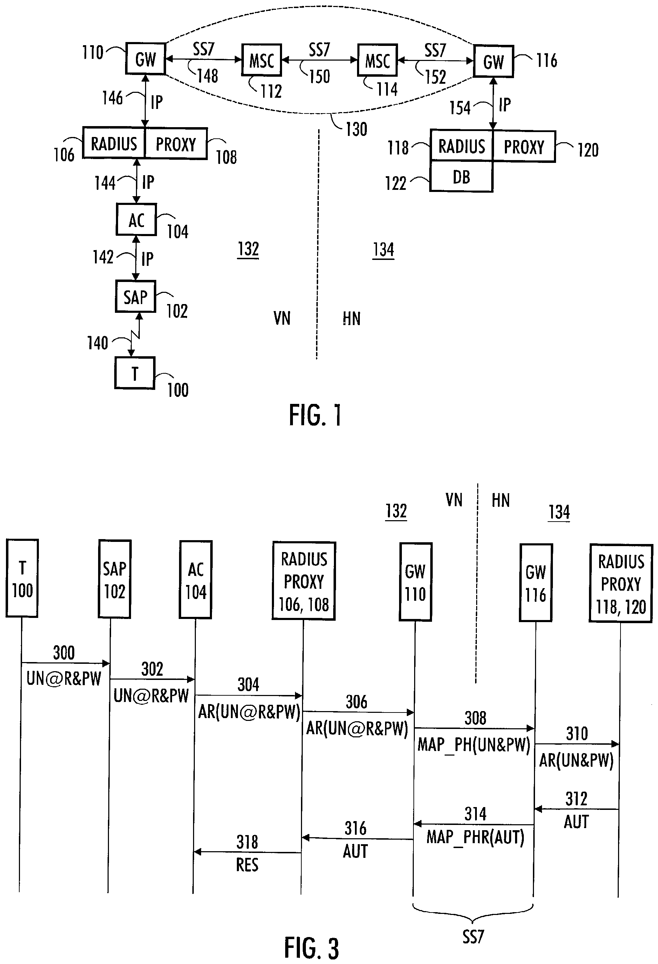

Figure 1 illustrates a simplified example of the structure of a wireless network and its interfaces. The wireless network 132 is in our example a visited network from the viewpoint of a wireless data transmission terminal 100, because the user of the wireless data transmission terminal 100 has originally received an access right to the network from a home network 134.

The data transmission terminal 100 is capable of establishing a bidirectional data transmission connection 140 to a service access point 102, in other words it can be, for example, a portable computer, a PDA (Personal Digital Assistant) or a device of the type of Nokia Communicator®. The data transmission terminal 100 is provided with a card implementing a wireless local area network, with a Bluetooth® transceiver, or with other technology enabling bidirectional data transmission and implementation of the roaming concept. Typically, the data transmission terminal 100 also contains an antenna, a user interface and a battery. At present, there is a variety of data transmission terminals 100, for instance terminals mounted in a car, or portable ones.

The visited network 132 comprises a service access point (SAP) 102, to which the data transmission terminal 100 is connectable with a connection 140. The service access point 102 forms what is called an access zone (also known as a hotspot), for instance in an office, a university campus, a hotel or an airport, where local area network connections are offered to users. Users of portable computers, for example, can be provided with a rapid wireless broadband service via the access zone. Further, the visited network 132 comprises an authentication server 106 connected to the service access point 102.

In an embodiment, the service access point 102 is configured to use a wireless local area network for implementing the connection 140 to the wireless data transmission terminal 100. In a wireless local area network, a physical cable is replaced with a radio connection, a microwave connection, or an infrared connection. A wireless local area network may be, for example, a wireless local area network according to the IEEE (the Institute of Electrical and Electronics Engineers, Inc.) standard 802.11 or 802.11b. It may also be called wireless Ethernet. WECA (Wireless Ethernet Compatibility Alliance) is a cooperation body formed by numerous companies that has registered the trademark WiFi® (Wireless Fidelity), the purpose of which is to ensure compatibility of devices according to standard 802.11.

In an embodiment, the service access point 102 comprises a short-range radio transceiver for implementing the connection 140 to the wireless data transmission terminal 100. The short-range transceiver may be, for example, a radio transceiver according to Bluetooth® technology. According to Bluetooth® technology, it is possible to manufacture an integrated circuit, which can be positioned in both the service access point 102 and the wireless data transmission terminal 100, and with which a radio connection 140 having a range of a few hundred meters at most can be implemented at a frequency of 2.4 gigahertz. The radio transceiver can naturally be implemented with other known radio technologies enabling a bidirectional data transmission connection.

The use of both a wireless local area network and a short-range radio transceiver has the great advantage that the frequency band defined for them is usually readily available, so that the network operator does not have to reserve certain frequencies for its use at high costs, owing to which the prize of the service can be lowered for the end user. The situation is different in mobile systems, such as in the UMTS (Universal Mobile Telecommunications System) recently, where the price of a frequency band can rise very high.

The task of the service access point 102 is to function as a port through which the data transmission services of the visited network 132 are offered to the data transmission terminal 100. If the data transmission connection 140 is implemented with a wireless local area network, the service access point of the wireless local area network can function as the service access point 102, the service access point serving as a wireless Ethernet bridge to the local area network. The service access point 102 thus comprises a radio module for implementing radio connections, as well as software and hardware required for data encryption of radio connections. The service access point 102 may also comprise an external modem which allows implementation of a dial-up access to an Internet service provider (ISP), in which case the service access point 102 may contain a firewall implemented with NAT (Network Address Translation) technology, for instance, for protecting the local area network.

The visited network 132 may also comprise an access controller (AC) 104 between the service access point 102 and the authentication server 106, which access controller functions as a gateway between the access zone and the Internet. It is thus possible to connect to a WWW (World-Wide Web) server from the visited network 132 via the access controller 104, the data transmission terminal 100 being able to exchange information with the WWW server after authentication. The access controller 104 attends to authentication of users, for example, monitors the use of the network in real time and collects information for billing. Depending on the volume of traffic in the visited network 132, the service access point 100 and the access controller 104 may be separate network elements or they can be integrated into one network element.

The authentication server 106 may be an AAA server (Authentication, Authorization and Accounting), in which case it attends not only to the authentication of the user, i.e. the alleged identity of the user, but also to authorization and accounting to bill for the use. The authentication server 106 can thus use an AAA protocol defined by the IETF (Internet Engineering Task Force), for instance the Radius protocol (Remote Authentication Dial-in User Service, RADIUS) or the Diameter protocol. In connection with the authentication server 106 or as part of it, there is a proxy 108. The proxy 108 is responsible for further transmitting the authentication requests from the authentication server 106 of the visited network 132 to the authentication server 118 of the home network 134. The authentication request contains the roaming user's user-ID password pair. In roaming, two network operators allow their users to use services of either network 132, 134. Selection of the authentication server used for authentication of the roaming user is based on authentication domains (known also as authentication realms), in which data is stored on users and access rights. Users of different network operators can be divided into different authentication domains in order to find the right authentication server. The authentication domains can be defined in files of the proxy 108, for instance. If the user is the visited network's 132 own user, the authentication server 106 performs authentication locally after it has received the user-ID password pair from the data transmission terminal 100 in connection with the login. In the example, the user of the data transmission terminal 100 is not the visited network's own user but a roaming user, in which case the user-ID password pair is transferred from the authentication server 106 of the visited network 132 to the authentication server 118 of the home network 134. In the manner shown, the authentication server 118 of the home network 134 may also comprise a proxy 120. Further, the authentication server 118 also comprises a database 122, in which the access rights are determined. Naturally also the authentication server 106 comprises a database, but for the sake of clarity, it is not shown in Figure 1, because the information required for authenticating the roaming data transmission terminal 100 have been determined in the database 122 of the authentication server 118 of the home network 134.

In mobile systems, the roaming function is a functional entity in the mobility management (MM), which enables correct routing of a call when a user moves with his mobile telephone from a home mobile system to a visited mobile system. Examples of mobile stations include the second generation GSM (Global System for Mobile Communications), the 2.5-generation GPRS (General Packet Radio System) or EGPRS (Enhanced GPRS) based on the GSM, and a third generation UMTSD (Universal Mobile Telecommunications System). If required, further information on mobile systems and a roaming function can be found in specifications, for instance in the GSM and UMTS system specifications and in the literature of the field, such as in Introduction to 3G Mobile Communications. Arthech House 2001. ISBN 1-58053-287-X by Juha Korhonen.

In the wireless network 132, 134 described here, the roaming function can be simpler than in mobile systems. If it is only desirable to establish the data transmission connection 140 with the data transmission terminal 100 to the service access point 102 in order to be able to search information in a server in the Internet, the correct call routing is not naturally needed, but only user authentication is required, in other words checking whether the user has the access right to the service access point 102 in question. In our example, the access right is based on there being an agreement between the operator of the home network 134 and the operator of the visited network 132, which agreement gives the user of the home network 134 a right to use the service access point 102 of the visited network.

The visited network 132 thus comprises a service access point 102 for establishing a connection 140 to the roaming wireless data transmission terminal 100, and an authentication server 106 connected to the service access point 102 for authenticating the user of the wireless data transmission terminal 100. In the manner described above, the authentication server 106 is configured to transfer the user-ID password pair of the user of the roaming wireless data transmission terminal 100 to the authentication server 118 of the home network 134 by using the data transmission connection. Further, the visited network 132 comprises a gateway 110 connected to the authentication server 106 for establishing a data transmission connection between the authentication server 106 and the home network 134 by using existing signalling system No. 7 connections 130. The signalling system No. 7 (SS7) refers to a common channel signalling system defined by the ITU-T (International Telecommunication Union - Telecommunication Standardization Sector), the operation of which system is optimized for digital telecommunication networks. The use of SS7 is described in US patents 5,640,446; 5,966,431 and 6,324,183, for instance.

In the example of Figure 1, the network operators of both the visited network 132 and the home network 134 are also mobile system operators. Thus, the SS7 connections can be implemented by using existing SS7 connections 130 between operators' mobile systems. An SS7 connection 150 between a mobile services switching centre 112 of the visited network's 132 operator and a mobile services switching centre 114 of the home network's 134 operator is shown of the existing SS7 connections 130. As described in Figure 1, also the home network 134 comprises a gateway 116 between the mobile services switching centre 114 and the authentication server 118. The data transmission connection between the gateway 110, 116 and the mobile services switching centre 112, 114 uses also SS7 connections 148, 152. In the example of Figure 1, the network elements 102, 104, 106 and 110 of the visited network 132 are connected to each other with IP connections 142, 144, 146, and in the same way, the network elements 116, 118 of the home network are connected to each other with an IP connection 154, but it is obvious that in the visited network 132 and/or the home network 134 any suitable protocol can be used in the traffic between network elements.

The gateway 110 is configured to use in a data transmission connection for the transfer of the user-ID password pair such a mobile system protocol that has not been specified for transferring a user-ID password pair between the visited network 132 and the home network 134. The mobile system protocol not being specified for this particular purpose means that the protocol is not, according to the mobile system specifications defining it, intended for this purpose, and that the protocol has not been used for this purpose in known mobile system implementations so far. In other words, the protocol is used in a way that deviates from what it was designed for. One example of such a protocol is a mobile application part protocol (MAP protocol). The user ID-password pair is placed in such a protocol-conforming message/field into which it fits with regard its size. In addition, known methods can be used for encrypting messages, as far as the encryption method is known to both the visited network 132 and the home network 134. The following shows a prepareHandover message conforming to the MAP protocol, described with ASN.1 (Abstract Syntax Notation One) and taken from the GSM specification 09.02 (Version 6.1.1 Release 1997):

```
 prepareHandover OPERATION
   ARGUMENT
   prepareHO-Arg SEQUENCE {
      targetCellId OCTET STRING (SIZE (5 .. 7)) OPTIONAL,
      ho-NumberNotRequired NULL OPTIONAL,
        bss-APDU SEQUENCE {
           protocolId ENUMERATED {
             gsm-0408 (1),
             gsm-0806 (2),
             gsm-BSSMAP (3),
             ets-300102-1 (4)},
           signalInfo OCTET STRING (SIZE (1 .. 200)),
           extensionContainer SEQUENCE {
             privateExtensionList [0] IMPLICIT SEQUENCE SIZE
              (1 .. 10) OF SEQUENCE {
                extId MAP-EXTENSION .&extensionId ({
                   ,
                   ...}),
                extType MAP-EXTENSION .&ExtensionType ({
                   ,
                   ...}{ @extId}) OPTIONAL} OPTIONAL,
             pcs-Extensions [1] IMPLICIT SEQUENCE {
              ...} OPTIONAL,
           ...} OPTIONAL,
        ...} OPTIONAL,
   ...}
 RESULT
   prepareHO-Res SEQUENCE {
     handoverNumber OCTET STRING (SIZE (1 .. 20))
      (SIZE (1 .. 9)) OPTIONAL,
     bss-APDU SEQUENCE {
        protocolId ENUMERATED {
           gsm-0408 (1),
           gsm-0806 (2),
           gsm-BSSMAP (3),
           ets-300102-1 (4)},
        signalInfo OCTET STRING (SIZE (1 .. 200)),
        extensionContainer SEQUENCE {
           privateExtensionList [0] IMPLICIT SEQUENCE SIZE
           (1 .. 10) OF SEQUENCE {
             extId MAP-EXTENSION .&extensionId ({
                ,
                ...}),
             extType MAP-EXTENSION .&ExtensionType ({
                ,
                ...} {@extId}) OPTIONAL} OPTIONAL,
           pcs-Extensions [1] IMPLICIT SEQUENCE {
           ...} OPTIONAL,
         ...} OPTIONAL,
      ...} OPTIONAL,
   ...}
 ERRORS {
   -- systemFailure -- localValue : 34,
   -- dataMissing -- localValue : 35,
   -- unexpectedDataValue -- localValue : 36,
   -- noHandoverNumberAvailable -- localValue : 25}
   ::= localValue : 68
```

For instance a singallnfo field of a size of 200 octets, i.e. 1 600 bits, can be used for transferring the user-ID password pair. The message description shown also contains a description of the response message prepareHO-Res, so the signalInfo field in the response message can also be used for transferring an authentication response. The response message can also be used for acknowledgement; in other words, the home network uses the response message for informing the visited network that it has received the user-ID password pair. The actual authentication response can thus be transmitted by using either the same response message type or another message appropriate for the purpose.

An agreed field can be used for transferring the user-ID password pair encrypted, and another field can be used for transferring information on encryption keys of the connection 140 to be established between the data transmission terminal 100 and the service access point 102, for instance. Also the short-message protocol can be used in such a way that the user-ID password pair is placed in one or more short messages in the authentication server 106, the short messages being then placed for example in MAP protocol messages in the gateway 110. The gateway 110 is thus configured to place the user-ID password pair in at least one message of the mobile system protocol. In practice, the gateway 100 thus encapsulates the user-ID password pair in the mobile system protocol. US patent 5,864,761, incorporated as reference herein, describes the use of the MAP protocol in connection with SS7 to implement traffic within one mobile communication system.

The user-ID password pair of the user 100 of the roaming data transmission terminal 100 is thus transferred from the authentication server 106 of the visited network 132 via the gateway 110, SS7 network 130 and gateway 116 to the authentication server 118 of the home network 134, where the authentication is actually performed. The response to the authentication is transmitted in the opposite order from the authentication centre 118 of the home network 134 to the authentication server 106 of the visited network 132. The response contains information on whether the user of the data transmission terminal 100 has an access right to the data transmission services provided by the visited network 132.

In an embodiment, the gateway 110 is configured to retrieve from a mapping table the address information on the home network 134 of the roaming wireless data transmission terminal 100 to establish a data transmission connection. The mapping table contains, for example, the SS7 address of the mobile services switching centre 114 of the home network 134, for example what is called a global title (GT).

In an embodiment, the authentication servers 106, 118 use the Radius protocol, in which case the gateway 110 is configured to place parameters conforming to the Radius protocol in the protocol of the mobile communication system. In addition, consecutive numbering can be used in the Radius protocol to identify the authentication response belonging to the user-ID password pair; in other words, for example number X is placed in the message used for transferring the user-ID password pair, the same number X being placed in the message used for transferring the authentication response.

In an embodiment, the gateway 110 is configured to transfer billing information on the connection 140 established with the user-ID password pair between the wireless data transmission terminal 100 and the visited network 132 to the home network 134 by using the mobile system protocol.

The service access point 102, the access controller 104, the authentication server 106, the proxy 108 and the gateway 110 comprise data transmission hardware, with which the network element in question communicates with other network elements, and a control unit controlling the operation of the network element, presently implemented as a processor with software, but also different hardware implementations are feasible, for instance a circuit constructed of separate logic components or one or more application-specific integrated circuits (ASIC). The advantage of a software implementation is that it is easy to maintain: the above-described operation of network elements is thus implemented for instance as program modules that can be updated more easily than a hardware solution.

Also a combination of different implementations is feasible. When selecting the implementation for performing the configuration, those skilled in the art will take into account the requirements for the current consumption of the device, required processing power, manufacturing costs, production volumes and requirements for the updating and maintenance, for example. Depending on the extent of the traffic and geographical extent of the network 132, the integration degree of the network elements 102, 104, 106, 108, 110 can vary. The network elements can be separate or combined. As mentioned earlier, the service access point 102 and the access controller 104 can be integrated into one device. In the same way, the authentication server 106 and the proxy 108 can be integrated into one device. The network elements 102, 104, 106, 108, 110 can also be implemented as plug-in units mounted on a rack. In such a case, the plug-in units communicate with each other for instance via a back plane attached to the rear part of the rack. When the network elements 102, 104, 106, 108, 110 are implemented as plug-in units, their assembly can be easily changed, if desired, for example when the network is extended. In the same way, the desired integration degree and decentralization/centralization degree of data processing can be determined flexibly. In large networks the network element can thus be dedicated for only certain tasks, whereas in small networks one network element can be responsible for several tasks described separately in Figure 1.

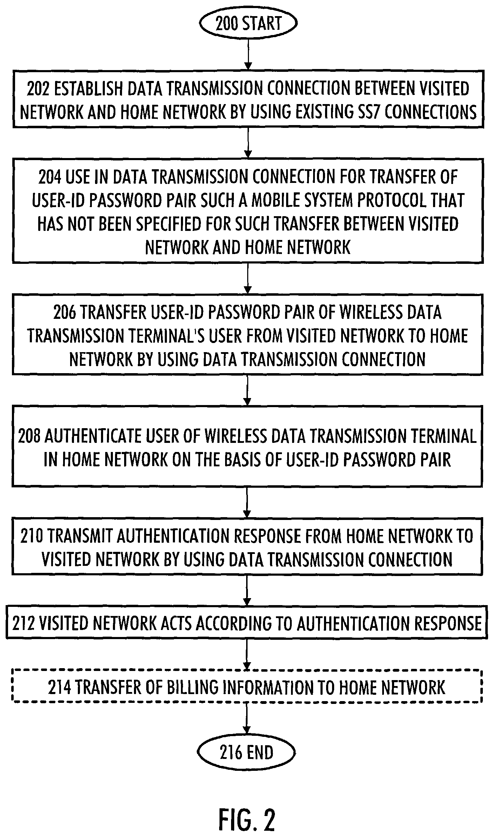

The following describes, with reference to the flow chart of Figure 2, a method for transferring a user-ID password pair of a user of a roaming wireless data transmission terminal between the visited network and the home network. At the same time, reference is made to Figure 3, which illustrates possible signalling between different network elements. Performing the method begins in 200 when the user of the roaming wireless data transmission terminal 100 wishes to use a service access point. A connection can be established in the method between the visited network and the wireless data transmission network by using a wireless local area network, short-range radio transceivers or other technology appropriate for the purpose. Upon the login, the roaming network obtains the user-ID password pair given to the user. The visited network identifies, for example on the basis of the domain name after the @-sign in the user ID, e.g. sonera.com, that the user is a roaming user. In Figure 3, the wireless data transmission network 100 transmits its user ID with the network identifier and its password in a message 300 to the service access point 102, which further transmits a message 302 to the access controller 104. The access controller 104 transmits an access request 304 to the authentication server / proxy 106/108, which transmits the access request to the gateway 110.

Next, a data transmission connection is established in 202 between the visited network and the home network by using existing signalling system No. 7 connections. In accordance with 204, such a protocol is used in the data transmission connection for transferring the user-ID password pair that has not been specified for the transfer of a user-ID password pair between the visited network and the home network. The protocol of the mobile communication system can be a mobile application part protocol or another mobile system protocol suitable for the purpose. In an embodiment, the user-ID password pair is placed in at least one message of the mobile system protocol. In an embodiment, parameters according to the Radius protocol are placed in the mobile system protocol. In an embodiment, a data transmission connection is established in the authentication server of the home network, in which the authentication of the user of the wireless data transmission terminal is performed. In an embodiment, the address information on the home network of the roaming wireless data transmission terminal is retrieved from the mapping table to establish a data transmission connection.

Next, in 206, the user-ID password pair of the user of the wireless data transmission terminal is transferred from the visited network to the home network by using the data transmission connection. In Figure 3, the user-ID password pair is transferred in a MAP prepareHandover message 308 from the gateway 110 of the visited network 132 to the gateway 116 of the home network 134 by using SS7 connections. As seen from Figure 3, it is not necessary to transfer the network identifier in the message 308, because the gateway 110 identified with it where the SS7 connection was to be established. Next, the gateway 116 of the home network 134 transmits an access request 310 unloaded from the MAP prepareHandover message to the authentication server / proxy 118, 120.

In accordance with 208, the user of the wireless data transmission terminal is authenticated in the home network on the basis of the user-ID password pair. Subsequently, an authentication response is transmitted in 210 from the home network to the visited network by using a data transmission connection. In Figure 3, the authentication response 312 is transmitted from the authentication server / proxy 118/120 to the gateway 116, from which the authentication response is transmitted in a MAP prepareHO-Res message 314 to the gateway 110 by using SS7 connections. The gateway 110 unloads the MAP message 314 in question and transmits the authentication response to the authentication server / proxy 106/108.

In accordance with 212, the visited network acts in accordance with the authentication response. In other words, an access right to the visited network is given to the roaming user if the authentication was successful in the home network; otherwise it is not given. In Figure 3, the authentication result 318 is reported to the access controller 318.

Performance of the method is terminated in 216. Before terminating the method, billing information on the connection established with the user-ID password pair between the wireless data transmission terminal and the visited network can optionally be transferred to the home network by using a mobile system protocol in accordance with 214. Devices described in connection with Figure 1 can be used for implementing the method, but also other kinds of environments are possible.

Although the invention has been described above with reference to the example according to the attached drawings, it is obvious that the invention is not restricted to it but can be modified in a plurality of ways within the scope of the attached claims.

## Claims

1. A method for transferring a user-ID password pair of a user of a roaming wireless data transmission terminal between a visited network and a home network, comprising:
transferring (206) the user-ID password pair of the user of the wireless data transmission terminal from the visited network to the home network by using a data transmission connection;
**characterized in that** the method further comprises:
establishing (202) a data transmission connection between the visited network and the home network by using existing connections of the signalling system No. 7; and
using (204) in the data transmission connection for the transfer of the user-ID password pair such a mobile system protocol that has not been specified for the transfer of a user-ID password pair between the roaming network and the home network, and in such a manner that the user-ID password pair is placed in such a protocol-conforming message/field of the mobile system protocol into which it fits with regard its size,
wherein the mobile system protocol is a mobile application part protocol.

2. The method of claim 1, further comprising:
retrieving from a mapping table the address information on the home network of the roaming wireless data transmission terminal to establish the data transmission connection.

3. The method of claim 1, wherein parameters conforming to the Radius protocol (Remote Authentication Dial-In User Service) are placed in the mobile system protocol.

4. The method of claim 1, wherein the user-ID password pair is placed in at least one message of the mobile system protocol.

5. The method of claim 1, wherein the method further comprises:
establishing a connection between the visited network and the wireless data transmission terminal by using a wireless local area network.

6. The method of claim 1, wherein the method further comprises:
establishing a connection between the visited network and the wireless data transmission connection by using short-range radio transceivers.

7. The method of claim 1, wherein the method further comprises:
transferring billing information on the connection established between the wireless data transmission terminal and the visited network to the home network by using the mobile system protocol.

8. The method of claim 1, wherein the data transmission connection is established to the authentication server of the home network, where the user of the wireless data transmission terminal is authenticated.

9. A wireless network, comprising:
a service access point (102) adapted to establish a connection (140) to a roaming wireless data transmission terminal (100); and
an authentication server (106) connected to the service access point (102) adapted to authenticate the user of the wireless data transmission terminal (100), which authentication server (106) is configured to transfer the user-ID password pair of the user of the roaming wireless data transmission terminal (100) to a home network (134) by using a data transmission connection;
**characterized in that** the wireless network further comprises:
a gateway (110) connected to the authentication server (106) adapted to establish a data transmission connection between the authentication server (110) of a visited network (132) and the authentication server (118) of the home network (134) by using existing signalling system No. 7 connections (130), and by using in the data transmission connection for the transfer of a user-ID password pair such a mobile system protocol that has not been specified for transferring a user-ID password pair between the visited network (132) and the home network (134), and in such a manner that the user-ID password pair is placed in such a protocol-conforming message/field of the mobile system protocol into which it fits with regard its size,
wherein the mobile system protocol is a mobile application part protocol.

10. The wireless network of claim 9, wherein the gateway (110) is configured to retrieve from a mapping table the address information on the home network (134) of the roaming wireless data transmission terminal (100) to establish the data transmission connection.

11. The wireless network of claim 9, wherein the gateway (110) is configured to place parameters conforming to the Radius (Remote Authentication Dial-In User Service) protocol in the mobile system protocol.

12. The wireless network of claim 9, wherein the gateway (110) is configured to place the user-ID password pair in at least one message of the mobile system protocol.

13. The wireless network of claim 9, wherein the service access point (102) is configured to use a wireless local area network for implementing the connection (140) to the wireless data transmission terminal (100).

14. The wireless network of claim 9, wherein the service access point (102) comprises a short-range radio transceiver configured to implement the connection (140) to the wireless data transmission terminal (100).

15. The wireless network of claim 9, wherein the gateway (110) is configured to transfer billing information on the connection (140) established between the wireless data transmission terminal (100) and the visited network (132) to the home network by using the mobile system protocol.

## Patentansprüche

1. Verfahren zur Übertragung eines Benutzer-Identifizierungs-Kennwortpaares eines Benutzers eines Rufbereich wechselnden Drahtlos-Datenübertragungsendgeräts zwischen einem besuchten Netzwerk und einem Heimnetzwerk, mit:
Übertragen (206) des Benutzer-Identifizierungs-Kennwortpaares des Benutzers des Drahtlos-Datenübertragungsendgeräts aus dem besuchten Netzwerk in das Heimnetzwerk unter Anwendung einer Datenübertragungsverbindung;
**dadurch gekennzeichnet, dass** das Verfahren ferner umfasst:
Einrichten (202) einer Datenübertragungsverbindung zwischen dem besuchten Netzwerk und dem Heimnetzwerk unter Verwendung bestehender Verbindungen des Signalgebungssystems Nummer 7; und
Verwenden (204), in der Datenübertragungsverbindung für die Übertragung des Benutzer-Identifizierungs-Kennwortpaares, eines derartigen Mobilsystemprotokolls, das für die Übertragung eines Benutzer-Identifizierungs-Kennwortpaares zwischen dem Rufbereichwechsel-Netzwerk und dem Heimnetzwerk nicht spezifiziert worden ist, und derart, dass das Benutzer-Identifizierungs-Kennwortpaar in einer/einem einem derartigen Protokoll angepassten Nachricht/Feld des Systemmobilprotokolls angeordnet wird, in das es bezüglich seiner Größe hineinpasst,
wobei das Mobilsystemprotokoll ein Mobilanwendungsteilprotokoll ist.

2. Verfahren nach Anspruch 1, das ferner umfasst:
Abrufen, aus einer Zuordnungstabelle, der Adresseninformation bezüglich des Heimnetzwerks des Rufbereich wechselnden Drahtlos-Datenübertragungsendgeräts, um eine Datenübertragungsverbindung einzurichten.

3. Verfahren nach Anspruch 1, wobei Parameter, die mit dem Radius- (Fernauthentifizierungseinwählbenutzerdienst-) Protokoll konform sind, in dem Mobilsystemprotokoll angeordnet werden.

4. Verfahren nach Anspruch 1, wobei das Benutzer-Identifizierungs-Kennwortpaar in mindestens einer Nachricht des Mobilsystemprotokolls angeordnet wird.

5. Verfahren nach Anspruch 1, wobei das Verfahren ferner umfasst:
Einrichten einer Verbindung zwischen dem besuchten Netzwerk und dem Drahtlos-Datenübertragungsendgerät unter Anwendung eines Drahtlos-Netzwerkes des lokalen Bereichs.

6. Verfahren nach Anspruch 1, wobei das Verfahren ferner umfasst:
Einrichten einer Verbindung zwischen dem besuchten Netzwerk und dem Drahtlos-Datenübertragungsendgerät unter Anwendung von Funk-Sender/Empfängern mit kurzer Reichweite.

7. Verfahren nach Anspruch 1, wobei das Verfahren ferner umfasst:
Übertragen einer Rechnungsinformation bezüglich der Verbindung, die zwischen dem Drahtlos-Datenübertragungsendgerät und dem besuchten Netzwerk eingerichtet ist, zu dem Heimnetzwerk unter Verwendung des Mobilsystemprotokolls.

8. Verfahren nach Anspruch 1, wobei die Datenübertragungsverbindung zu dem Authentifizierungsserver des Heimnetzwerkes eingerichtet wird, wobei der Benutzer des Drahtlos-Datenübertragungsendgeräts authentifiziert wird.

9. Drahtlos-Netzwerk mit:
einem Dienstzugriffspunkt (102), der ausgebildet ist, eine Verbindung (140) zu einem Rufbereich wechselnden Drahtlos-Datenübertragungsendgerät (100) einzurichten; und
einem Authentifizierungsserver (106), der mit dem Dienstzugriffspunkt (102) verbunden und ausgebildet ist, den Benutzer des Drahtlos-Datenübertragungsendgeräts (100) zu authentifizieren, wobei der Authentifizierungsserver (106) ausgebildet ist, das Benutzer-Identifizierungs-Kennwortpaar des Benutzers des Rufbereich wechselnden Drahtlos-Datenübertragungsendgeräts (100) unter Anwendung einer Datenübertragungsverbindung zu einem Heimnetzwerk (134) zu übertragen;
**dadurch gekennzeichnet, dass** das Drahtlos-Netzwerk ferner umfasst:
einen Zugang (110), der mit dem Authentifizierungsserver (106) verbunden und ausgebildet ist, eine Datenübertragungsverbindung zwischen dem Authentifizierungsserver (110) eines besuchten Netzwerks (132) und dem Authentifizierungsserver (118) des Heimnetzwerkes (134) unter Anwendung bestehender Verbindungen des Signalgebungssystems Nummer 7 (130) und durch Verwendung bei der Datenübertragungsverbindung für die Übertragung eines Benutzer-Identifizierungs-Kennwortpaares eines derartigen Mobilsystemprotokolls, das nicht für die Übertragung eines Benutzer-Identifizierungs-Kennwortpaares zwischen dem besuchten Netzwerk (132) und dem Heimnetzwerk (134) spezifiziert ist, derart einzurichten, dass das Benutzer-Identifizierungs-Kennwortpaar in einer/einem derartigen Protokoll konformen Nachricht/Feld des Mobilsystemprotokolls angeordnet ist, in welche das Paar hinsichtlich seiner Größe hineinpasst,
wobei das Mobilsystemprotokoll ein Mobilanwendungsteilprotokoll ist.

10. Drahtlos-Netzwerk nach Anspruch 9, wobei der Zugang (110) ausgebildet ist, aus einer Zuordnungstabelle die Adresseninformation bezüglich des Heimnetzwerks (134) des Rufbereichs wechselnden Drahtlos-Datenübertragungsendgeräts (100) zum Einrichten der Datenübertragungsverbindung abzurufen.

11. Drahtlos-Netzwerk nach Anspruch 9, wobei der Zugang (110) ausgebildet ist, Parameter, die konform zu dem Radius-(Fernauthentifizierungseinwählbenutzerdienst-) Protokoll sind, in dem Mobilsystemprotokoll anzuordnen.

12. Drahtlos-Netzwerk nach Anspruch 9, wobei der Zugang (110) ausgebildet ist, das Benutzer-Identifizierungs-Kennwortpaar in mindestens einer Nachricht des Mobilsystemprotokolls anzuordnen.

13. Drahtlos-Netzwerk nach Anspruch 9, wobei der Dienstzugriffspunkt (102) ausgebildet ist, ein Drahtlos-Netzwerk des lokalen Bereichs zum Einrichten der Verbindung (140) zu den Drahtlos-Datenübertragungsendgerät (100) zu verwenden.

14. Drahtlos-Netzwerk nach Anspruch 9, wobei der Dienstzugriffpunkt (102) einen FunkSender/Empfänger für kurze Reichweite umfasst, der ausgebildet ist, die Verbindung (140) zu dem Drahtlos-Datenübertragungsendgerät (100) einzurichten.

15. Drahtlos-Netzwerk nach Anspruch 9, wobei der Zugang (110) ausgebildet ist, Rechnungsinformation bezüglich der Verbindung (140), die zwischen dem Drahtlos-Datenübertragungsendgerät (100) und dem besuchten Netzwerk (132) eingerichtet ist, unter Anwendung des Mobilsystemprotokolls zu dem Heimnetzwerk zu übertragen.

## Revendications

1. Procédé de transfert d'une paire de mots de passe d'identification d'utilisateur d'un utilisateur d'un terminal de transmission de données sans fil itinérant entre un réseau visité et un réseau domestique, comprenant :
le transfert (206) de la paire de mots de passe d'identification d'utilisateur d'un utilisateur d'un terminal de transmission de données sans fil itinérant du réseau visité vers le réseau domestique à l'aide d'une connexion de transmission de données ;
**caractérisé en ce que** ce procédé comprend en outre :
l'établissement (202) d'une connexion de transmission de données entre le réseau visité et le réseau domestique à l'aide de connexions existantes du système de signalisation N° 7 ; et
l'utilisation (204) dans la connexion de transmission de données pour le transfert de la paire de mots de passe d'identification d'utilisateur tel qu'un protocole de système mobile qui n'a pas été spécifié pour le transfert d'une paire de mots de passe d'identification d'utilisateur entre le réseau itinérant et le réseau domestique et de façon à ce que la paire de mots de passe d'identification d'utilisateur soit placée dans un message /champ conforme au protocole du protocole de système mobile dans lequel il s'adapte en ce qui concerne sa taille,
le protocole de système mobile étant un protocole de partie d'application mobile.

2. Procédé selon la revendication 1, comprenant en outre :
la récupération, à partir d'une table de mappage, des informations d'adresses sur le réseau domestique du terminal de transmission de données sans fil itinérant pour établir la connexion de transmission de données.

3. Procédé selon la revendication 1, dans lequel des paramètres conformes au protocole Radius (Remote Authentication Dial-In User Service) sont placés dans le protocole de système mobile.

4. Procédé selon la revendication 1, dans lequel la paire de mots de passe d'identification d'utilisateur est placée dans au moins un message du protocole de système mobile.

5. Procédé selon la revendication 1, ce procédé comprenant en outre :
l'établissement d'une connexion entre le réseau visité et le terminal de transmission de données sans fil à l'aide d'un réseau local sans fil.

6. Procédé selon la revendication 1, ce procédé comprenant en outre :
l'établissement d'une connexion entre le réseau visité et le terminal de transmission de données sans fil à l'aide d'émetteurs-récepteurs à courte portée.

7. Procédé selon la revendication 1, ce procédé comprenant en outre :
le transfert d'informations de facturation sur la connexion établie entre le terminal de transmission de données sans fil et le réseau visité vers le réseau domestique à l'aide du protocole de système mobile.

8. Procédé selon la revendication 1, dans lequel la connexion de transmission de données est établie avec le serveur d'authentification du réseau domestique, dans lequel l'utilisateur du terminal de transmission de données sans fil est authentifié.

9. Réseau sans fil comprenant :
un point d'accès au service (102) conçu pour établir une connexion (140) avec un terminal de transmission de données sans fil itinérant (100) ; et
un serveur d'authentification (106) connecté au point d'accès au service (102) conçu pour authentifier l'utilisateur du terminal de transmission de données sans fil (100), ce serveur d'authentification (106) étant conçu pour transférer la paire de mots de passe d'identification d'utilisateur de l'utilisateur du terminal de transmission de données sans fil itinérant (100) vers un réseau domestique (134) à l'aide d'une connexion de transmission de données ;
**caractérisé en ce que** le réseau sans fil comprend en outre :
une passerelle (110) connectée au serveur d'authentification (106) conçu pour établir une connexion de transmission de données entre le serveur d'authentification (110) d'un réseau visité (132) et le serveur d'authentification (118) du réseau domestique (134) à l'aide de connexions existantes d'un système de signalisation N°7 (130) et en utilisant, dans la connexion de transmission de données, pour le transfert d'une paire de mots de passe d'identification d'utilisateur entre le réseau visité (132) et le réseau domestique (134) et de façon à ce que la paire de mots de passe d'identification d'utilisateur soit placée dans un message/champ conforme à un protocole du protocole de système mobile dans lequel il s'adapte en ce qui concerne sa taille,
le protocole de système mobile étant un protocole de partie d'application mobile.

10. Réseau sans fil selon la revendication 9, dans lequel la passerelle (110) est conçue pour récupérer, à partir d'une table de mappage, les informations d'adresses sur le réseau domestique (134) du terminal de transmission de données sans fil itinérant (100) pour établir la connexion de transmission de données.

11. Réseau sans fil selon la revendication 9, dans lequel la passerelle (110) est conçue pour placer des paramètres conformes au protocole Radius (Remote Authentication Dial-In User Service) dans le protocole de système mobile.

12. Réseau sans fil selon la revendication 9, dans lequel la passerelle (110) est conçue pour placer la paire de mots de passe d'identification d'utilisateur dans au moins un message du protocole de système mobile.

13. Réseau sans fil selon la revendication 9, dans lequel le point d'accès au service (102) est conçu pour utiliser un réseau local sans fil pour implémenter la connexion (140) au terminal de transmission de données sans fil (100).

14. Réseau sans fil selon la revendication 9, dans lequel le point d'accès au service (102) comprend un émetteur-récepteur radio à courte portée conçu pour implémenter la connexion (140) avec le terminal de transmission de données sans fil (100).

15. Réseau sans fil selon la revendication 9, dans lequel la passerelle (110) est conçue pour transférer des informations de facturation sur la connexion (140) établie entre le terminal de transmission de données sans fil (100) et le réseau visité (132) vers le réseau domestique à l'aide du protocole de système mobile.
